# EUROPÄISCHE PATENTSCHRIFT

(11) **EP 1 690 588 B1**
(45) Veröffentlichungstag und Bekanntmachung des Hinweises auf die Patenterteilung: **31.03.2010**
(21) Anmeldenummer: 05003113.7
(22) Anmeldetag: 14.02.2005
(51) Int. Cl.: B01D 53/86, F23J 15/02

(54) **Anordnung zum Abscheiden von Grobasche aus einem Rauchgasstrom**
Device for separating coarse ash from a flue gas stream
Dispositif pour séparer de cendres grossières d'un courant de gaz de fumée

(43) Veröffentlichungstag der Anmeldung: 16.08.2006
(73) Patentinhaber: Evonik Energy Services GmbH, 45128 Essen (DE)
(72) Erfinder: Brüggendick, Herman, 46514 Schermbeck (DE); Benesch, Wolfgang, 44869 Bochum (DE); Gilgen, Ralf, 42555 Velbert (DE)
(74) Vertreter: Zenz, Joachim Klaus

(56) Entgegenhaltungen:
- EP-A- 0 600 440
- WO-A-2004/079034
- DE-A- 4 436 207

## Beschreibung

Die Erfindung betrifft allgemein das Gebiet der Kohlekraftwerke mit Trockenfeuerung und insbesondere eine Anordnung zum Abscheiden von Grobasche aus einem Rauchgasstrom, wobei in einem zu einem Entstickungskatalysator und/oder Wärmetauscher zur Verbrennungsluftvorwärmung (Luvo) führenden Rauchgaskanal ein Abscheidesieb angeordnet ist, das sich im wesentlichen über den gesamten Querschnitt des Rauchgaskanals erstreckt und eine Mehrzahl von Durchlässen zum Durchtritt von Rauchgas aufweist, wobei jeder Durchlaß einen Querschnitt hat, der kleiner ist als ein Querschnitt der abzuscheidenden Grobaschepartikel.

Bei Trockenfeuerungen von Kohlekraftwerken fällt Asche als trockener Staub an, der teilweise vom Rauchgasstrom mitgerissen wird. In Abhängigkeit von der Art der Kohle und der Temperaturverteilung innerhalb einer Brennkammer kann es zu örtlichen Überschreitungen des Ascheerweichungspunktes kommen. Dies führt dazu, daß die ursprünglich trockenen pulverförmigen Aschepartikel miteinander verkleben oder sogar zusammensintern. Die entstehenden Grobaschepartikel (Popkorn-Ash) können bekanntlich die Kanalwände von Entstickungs-Katalysatoren der Rauchgasreinigungseinrichtung verstopfen und/oder zu starken Druckabfällen im Katalysator, im nachgeschalteten Luftvorwärmer und/oder im Elektrofilter führen.

Aus der DE 102 27 639 A1 ist es bekannt, mit Hilfe einer Siebanordnung aus dem Rauchgasstrom Grobasche abzuscheiden, bevor sie den Katalysator erreicht. Die Siebanordnung ist dabei gegen die Wirkung einer Rückstellkraft aus einer Ruhestellung heraus auslenkbar. Der Rauchgasstrom unterliegt ständig geringfügigen Pulsationen, die ausreichen, an der Siebanordnung Bewegungen oder Vibrationen hervorzurufen. Dadurch werden die am Sieb abgeschiedenen Grobaschepartikel, soweit sie an der Siebfläche haften, abgeschüttelt.

Das Abscheidesieb ist bei dieser bekannten Anordnung in etwa vertikaler Anordnung am Einlaß eines Rauchgaskanals angeordnet. Die Grobaschepartikel werden in einen dem Sieb vorgeschalteten Aschetrichter abgeschüttelt.

Bei hohen Rauchgas-Strömungsgeschwindigkeiten sind die Metallmaschen des bekannten Abscheidesiebes erheblichen Abriebeffekten durch auf das Sieb auftreffende und durch das Sieb durchtretende Aschepartikel ausgesetzt. Aufgrund dieser Abriebeffekte entstehen Sieböffnungen, durch die Grobasche durchtreten kann, wodurch die Abscheidefunktion der Siebanordnung partiell aufgehoben wird. Daher müssen derartige Abscheideanordnungen zur Erhaltung ihrer Abscheidefunktion überprüft, gewartet und ggf. ausgetauscht werden, wobei das Kraftwerk über kurz oder lang kurz still gelegt werden muß.

Durch den Einsatz von Abscheidemodulen, die an der Anströmseite aus einem Material hoher mechanischer Verschleißfestigkeit, wie Keramik- oder Sintermaterial, bestehen, hat man die Standfestigkeit der Siebanordnung in Rauchgaskanälen bei hohen Rauchgas-Strömungsgeschwindigkeiten wesentlich verbessern können. Derartige Siebanordnungen aus verschleißfesten Materialien bedingen wegen der großen Abmessungen der Siebquerschnitte im Rauchgaskanal erhebliche Gestehungskosten.

Aus der DE 44 36 207 A1 ist es bekannt, eine Aschefangeinrichtung vor einem Katalysator in einem großvolumigen Umlenkkanal einzubauen. Der großvolumige Kanalteil ist der Gestalt des Katalysators und der Aschefangeinrichtung besonders anzupassen.

Der Erfindung liegt die Aufgabe zugrunde, eine ökonomisch herstellbare Abscheideanordnung zu schaffen, die auch bei hohen Rauchgas-Strömungsgeschwindigkeiten im Abgaskanal eine ausgezeichnete Abscheidefunktion und einen wartungsfreundlichen Betrieb ermöglicht.

Diese Aufgabe wird erfindungsgemäß durch eine Anordnung mit den Merkmalen des Patentanspruchs 1 gelöst.

Bei dieser Lösung geht die Erfindung von der Überlegung aus, daß derjenige vertikale Rauchgaskanal-Abschnitt, der den Entstickungskatalysator aufnimmt, auch dann einen relativ großen Öffnungsquerschnitt besitzt, wenn die Strömungsgeschwindigkeit in dem zumeist wesentlich enger dimensionierten kesselnahen Rauchgaskanal-Abschnitt hoch ist. Die niedrigen Strömungsgeschwindigkeiten, bei denen die Abriebeffekte erheblich niedriger sind, verbessern die Standfestigkeit der Siebanordnung auch bei Einsatz der preiswerteren metallischen Siebwerkstoffe um ein Vielfaches. Dabei ist das Abscheidesieb als Abscheideboden ausgebildet, der unter einem Neigungswinkel von 10° < a < 50° geneigt zur Horizontalebene in dem vertikalen Abschnitt des Rauchgaskanals eingebaut ist. Im Bereich des unteren Endes des Abscheidebodens ist wenigstens eine Austragsöffnung zum Abführen der abgeschiedenen Grobaschepartikel in einer benachbarten Wand des Rauchgaskanals ausgebildet. Der Neigungswinkel ist dabei so gewählt, daß die abgeschiedenen Grobaschepartikel unter Schwerkraft, unterstützt durch die in der Regel vorhandenen geringfügigen Pulsationen des Rauchgasstroms, zur Seite hin in Richtung der Austragsöffnung abfließen bzw. abgeschüttelt werden. Die wenigstens eine Austragsöffnung kann über eine äußere Beipaßleitung mit dem Rauchgaskanal stromab der Katalysatoranordnung verbunden sein. Zur Vergrößerung der Siebbodenoberfläche und damit zur weiteren Verminderung etwaiger Abriebeffekte besteht der Siebboden aus zickzackförmig gefalteten Abschnitten, deren Faltlinien in Gefällerichtung verlaufen. Zwischen jeweils zwei V-förmigen benachbarten Faltabschnitten des Siebbodens kann eine Rinne zum Abführen von abgeschiedenen Grobaschepartikeln ausgebildet sein. Vorzugsweise ist dabei jede Rinne mit einer Austragsöffnung verbunden.

Bei einer bevorzugten Ausführungsform der Erfindung ist vorgesehen, daß der erweiterte vertikale Abschnitt des Rauchgaskanals an einen engeren, im wesentlichen horizontalen Rauchgaskanal-Abschnitt anschließt, daß im Anschlußbereich Umlenkelemente angeordnet sind und daß das Abscheidesieb stromab der Umlenkelemente und stromauf eines dem Katalysator vorgeschalteten Strömungsgleichrichters angeordnet ist.

Eine besonders standfeste und ein Abfließen bzw. Abschütteln der abgeschiedenen Grobaschepartikel begünstigende Ausführungsform ist dadurch gekennzeichnet, daß das Abscheidesieb als Spaltsieb ausgebildet ist, bei dem die Durchlässe spaltförmig ausgebildet und durch parallele, im Querschnitt etwa dreieckige Stäbe begrenzt sind, die durch querverlaufende Riegel zu einem starren Modul zusammengeschlossen sind, wobei die spaltförmigen Durchlässe einen von der Zuströmseite zur Abströmseite hin erweiterten Querschnitt haben.

Eine bevorzugte Weiterbildung dieser Konstruktion ist dadurch gekennzeichnet, daß jeweils zwei Spaltsiebmodule unter Bildung einer Bodenrinne im wesentlichen v-förmig miteinander verbunden sind und daß die die Durchlässe begrenzenden Spaltsiebstäbe im wesentlichen rechtwinklig zum Rinnenverlauf angeordnet sind, um die Grobaschepartikel in die Rinne zu leiten. Auf den Spaltsiebstäben können die abgeschiedenen Grobaschepartikel behinderungsfrei in die Rinne abfließen und von dort der Austragsöffnung zugeführt werden. Diese Abführung der Grobaschepartikel über die Rinne wird durch die Neigung der Rinne zu einer Seitenwand des Rauchgaskanalabschnitts begünstigt.

Soweit die Einbauverhältnisse in dem den Entstickungskatalysator aufnehmenden Abschnitt des Rauchgaskanals eine ausreichende Neigung der Rinne nicht zulassen, kann die Abführung der Grobaschepartikel durch die Rinne zur Austragsöffnung beispielsweise durch akustische Hörner zum Erzeugen von Stoßwellen oder durch andere geeignete Partikel-Fördermaßnahmen verbessert werden.

Weitere vorteilhafte Weiterbildungen und der Erfindung sind in den Unteransprüchen gekennzeichnet.

Im folgenden wird die Erfindung anhand von in der Zeichnung schematisch dargestellten Ausführungsbeispielen näher erläutert. In der Zeichnung zeigen:
Figur 1 eine schematische Darstellung eines Teils eines Rauchgaskanals mit einem relativ engen, horizontalen Kanalabschnitt, einem mit Umlenkelementen versehenen Umlenkabschnitt und einem deutlich erweiterten Vertikalabschnitt, in welchem ein Siebboden zur Grobascheabscheidung stromauf einer Entstickungs-Katalysatoranordnung eingebaut ist;
Figur 2 eine perspektivische Teildarstellung des Siebbodens entsprechend dem Ausschnitt II in Figur 1;
Figur 2A eine Ausschnittdarstellung eines gefalteten Siebbodenausschnitts gemäß Ausschnitt II in Figur 2;
Figur 2B eine Frontdarstellung einer zwischen zwei benachbarten Siebbodenabschnitten gebildeten Rinne;
Figur 2C eine schematische perspektivische Teilansicht des Rinnenbereichs, wobei die einzelnen Siebabschnitte und der Rinnenboden als Spaltsieb ausgebildet sind;
Figur 3 eine Detailansicht des Ausschnitts III der Figur 1;
Figur 4 eine schematische Vertikalschnittansicht, ähnlich der Figur 1, eines abgewandelten Ausführungsbeispiels der Erfindung, wobei ein satteldachförmiger Siebboden in den oberen, an die Umlenkung anschließenden erweiterten und vertikal angeordneten Rauchgaskanalabschnitt eingebaut ist und wobei zwischen dem satteldachförmigen Abscheideboden und der ersten Stufe des Entstickungskatalysators ein Strömungsgleichrichter angeordnet ist;
Figur 5 eine schematische Schnittansicht eines Spaltsiebs, das gemäß einem bevorzugten Ausführungsbeispiel der Erfindung als Grobasche-Abscheidemodul verwendet wird; und
Figur 6 eine schematische Schnittansicht durch die Querstege oder Riegel einer gegenüber Figur 5 abgewandelten Spaltsiebausführung, wobei die Riegel als Strömungsgleichrichterelemente ausgebildet sind.

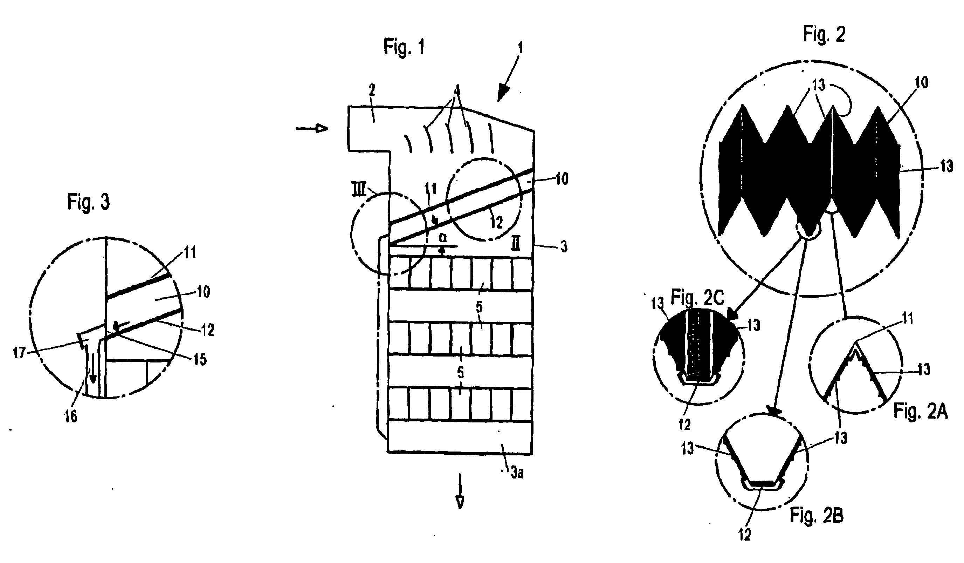

In Figur 1 ist eine schematische Teilansicht eines Rauchgaskanals mit einem horzontalen Kanalabschnitt 2 und einem gegenüber diesem wesentlich erweiterten vertikalen Kanalabschnitt 3 dargestellt. Im Übergangsbereich zwischen dem engen Kanalabschnitt 2 und dem erweiterten Kanalabschnitt 3 ist eine Gruppe von flügelartigen Umlenkelementen 4 angeordnet, welche den Rauchgasstrom vertikal nach unten umlenken und über den erweiterten Querschnitt des Rauchgas-Kanalabschnitts 3 verteilen. Im oberen Teil des Kanalabschnitts 3 stromab der Umlenkelemente 4, jedoch stromauf des mehrstufigen Entstickungs-Katalysators 5 ist ein der Grobascheabscheidung dienender Siebboden 10 geneigt zur Horizontalen eingebaut. Der Siebboden 10 besteht, wie weiter unten näher erläutert werden wird, aus mehreren Durchlässen zum Durchtritt von Rauchgas, wobei jeder Durchlaß einen Querschnitt hat, der kleiner ist als ein Querschnitt der abzuscheidenden Grobaschepartikel. Der Abscheideboden 10 erstreckt sich im wesentlichen über den gesamten Querschnitt des erweiterten Rauchgaskanalabschnitts 3.

Der Siebboden 10 des beschriebenen Ausführungsbeispiels hat eine der Vergrößerung der Siebfläche dienende, in Figur 2 schematisch dargestellte Faltung. Die Ausbildung der Firste 11 ist in Figur 2A und die Ausbildung der unten zwischen zwei aneinander angrenzenden Siebabschnitten gebildeten Rinnen 12 ist schematisch in Figur 2B dargestellt.

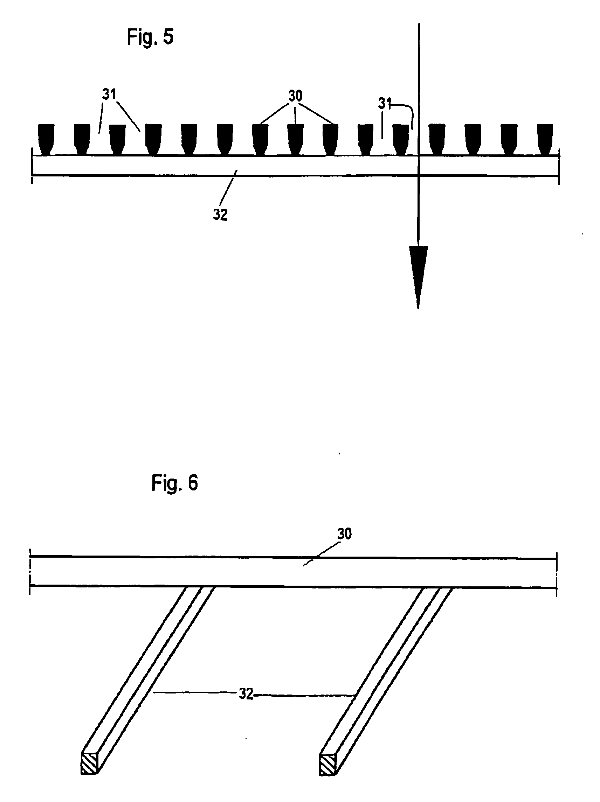

Alle Siebmodule bzw. -abschnitte sind in den beschriebenen Ausführungsbeispielen als Spaltsiebe ausgebildet, wobei die die Siebspalte begrenzenden parallelen Stäbe gemäß Darstellung in Figur 2C im wesentlichen rechtwinkelig zum Verlauf der benachbarten Rinne 12 angeordnet sind. Diese Spaltsiebanordnung hat den Vorteil, daß an den gefalteten Spaltsiebabschnitten abgeschiedene Aschepartikel unter Schwerkrafteinfluß und unter Einfluß der Rauchgasströmung auf jeweils parallelen Spaltsiebstäben abrutschen und in die Rinne 12 fallen. Die Funktion und Ausbildung des Spaltsiebs werden weiter unten in Verbindung mit Figur 5 noch näher erläutert.

Die Rinnen 12 der gefalteten Spaltsiebmodule 13 sind entsprechend der Neigung des Gesamtbodens 10 von rechts oben nach links unten geneigt und mit einer Austrittsöffnung 15 verbunden, die in einer benachbarten Seitenwand des Rauchgaskanalabschnitts 3 angeordnet ist. Die Austrittsöffnung 15 ist über eine in dem Rauchgaskanalabschnitt 3 verlaufende Beipaßleitung 16 mit dem Rauchgaskanalabschnitt 3a stromab der Katalysatoranordnung 5 verbunden. Diese Anordnung hat den Vorteil, daß die abgeschiedenen Grobaschepartikel unter Umgehung des Katalysators 5 in den Rauchgasstrom zurückgeführt werden und für den empfindlichen Entstickungs-Katalysatorstufen unschädlich sind. Außerdem kann das Druckgefälle über der Katalysatoranordnung zur Verbesserung der Förderung des abgeschiedenen Grobaschepartikel ausgenutzt werden. Über eine verschließbare Inspektionsöffnung 17 sind sowohl die Rinnen 12 als auch der Beipaßkanal 16 zugänglich.

Das in Figur 1 dargestellte Gefälle reicht normalerweise zum Bewegen der abgeschiedenen Grobaschepartikel entlang den parallelen Rinnen 12 und geeignete Verbindungswege zur Austragsöffnung 15 aus. Dies gilt um so mehr, da der Abgasstrom an den Ausströmflächen des Abscheidesiebes abgelenkt und verwirbelt wird, wodurch anhaftende Grobaschepartikel von ihren Abscheidestellen gelöst werden. Der Spaltsiebeffekt erweist sich zudem für die Abreinigung der Siebfalten als außerordentlich günstig, da die Spalte zur Abfallseite hin ein ungehindertes Abrollen von Grobaschepartikeln ermöglichen, und das im Gegensatz zu herkömmlichen Netzen oder geflochtenen Sieben.

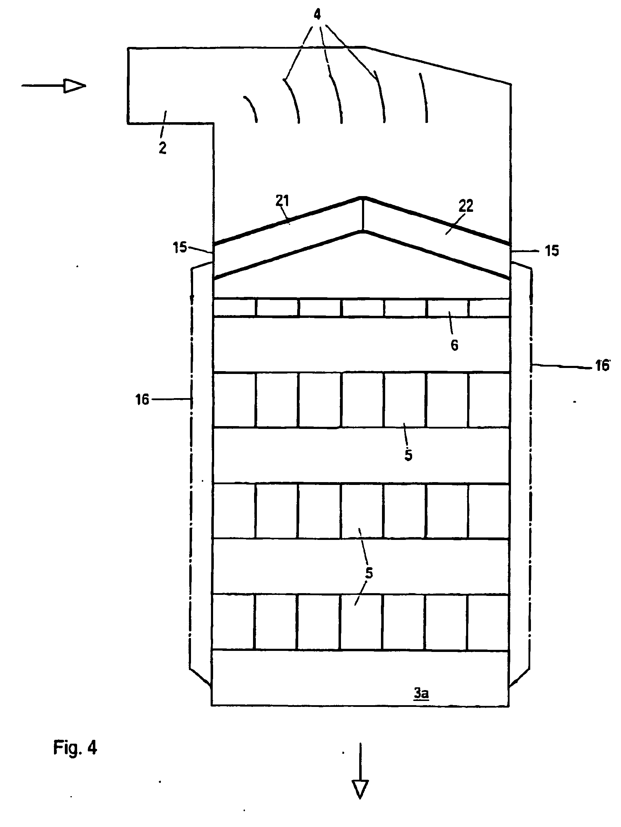

Die in Figur 4 schematisch dargestellte Anordnung unterscheidet sich von derjenigen gemäß Figur 1 dadurch, daß anstelle des einseitig geneigten Siebbodens 10 ein Siebboden 20 in Form eines Giebel- oder Satteldachs in den erweiterten Abschnitt 3 des Rauchgaskanals eingebaut ist. Die Einbaulage des satteldachförmigen Siebbodens 20 entspricht im Prinzip derjenigen des einseitig geneigten Siebbodens 10. Stromab des satteldachförmigen Siebbodens 20 und stromauf der Katalysatoranordnung ist ein Strömungsgleichrichter 6 eingebaut, der die aus dem gefalteten Siebboden 20 austretende Strömung etwa in Vertikalrichtung gleichzurichten sucht. Derartige Strömungsgleichrichter sind bekannt.

Die Ausbildung der beiden gegenläufig geneigten Abschnitte 21 und 22 des Satteldachbodens 20 entspricht jeweils derjenigen des Abscheidesiebes 10 im Ausführungsbeispiel gemäß Figur 1. Bei der satteldachförmigen Ausbildung sind Abscheideöffnungen 15 und Beipaßleitungen 16 an zwei gegenüberliegenden Seitenwänden des Rauchgaskanal-Abschnitts 3 angeordnet, und zwar derart, daß die jeweils über die Rinnen zur Seite hin (in entgegengesetzten Richtungen) abfließenden Aschepartikel über getrennte Beipaßleitungen 16 stromab der Katalysatoranordnung 5 in den Kanalabschnitt 3a abgeleitet werden.

In Figur 5 ist eine schematische Schnittansicht durch ein Spaltsiebabschnitt dargestellt. Wie zu sehen ist, haben die parallel verlaufenden Siebstäbe 30 ein etwa dreieckiges Querschnittsprofil und begrenzen Spalte 31, die in Richtung der mit Pfeil A bezeichneten Strömung aufgeweitet sind. Die abströmseitigen Kanten aller zu einem Siebmodul gehörigen Stäbe 30 sind durch Riegel oder Querstege 32 zu einer starren Baueinheit miteinander verbunden.

Wie zu sehen ist, können die an der Spaltsieboberfläche aufgefangenen Grobaschepartikel an den Spalteintritts stellen ungehindert in Spaltrichtung abrutschen oder abrollen, wodurch bereits eine geringe Neigung des Siebbodens beispielsweise im Bereich zwischen 10° und 30°, unter ungünstigen Verhältnissen bis zu 50° ausreicht, um den Abrollmechanismus in Gang zu halten. Die Verwendung eines Spaltsiebs als Siebboden 10 bzw. 20 ermöglicht bei geeigneter Gestaltung der Verbindungsriegel 32 die Integration der Gleichrichtfunktion des Strömungsgleichrichters 6 (Figur 4) in den Siebboden 10 bzw. 20. In Figur 6 ist schematisch dargestellt, wie die Verbindungsriegel 32 etwa ausgestellt werden können, um die gewünschte Gleichrichtfunktion durch das Spaltsieb zu erfüllen. Die Neigung der lamellenartigen Verbindungsriegel 32 richtet sich nach der Neigung der Modulen des Abscheidesiebes 10 bzw. 20; angestrebt wird ein Verlauf der Lamellen 32 etwa parallel zur Durchtrittsrichtung der Strömung durch die Katalysatoranordnung 5, d.h. vertikal. Abweichungen hiervon sind aber unschädlich, zumal die Strömungsgeschwindigkeiten in dem erweiterten Abschnitt 3 des Rauchgaskanals relativ gering sind.

Im Rahmen des Erfindungsgedankens sind zahlreiche Abwandlungen für den Fachmann naheliegend. So kann ein Abscheidesieb parallel zur ersten Stufe des Entstickungs-Katalysators, ggf. unmittelbar auf dessen Zuströmseite etwa horizontal gespannt oder angeordnet sein. Gerade in dieser Anordnung hat die Ausführung des Abscheidesiebs als Spaltsieb besondere Vorteile, da es sich relativ leicht abreinigen läßt, sei es durch mechanische Bewegung, durch Stoßwellen, durch Schneckenförderer oder auf pneumatischem Wege. Das Spaltsieb hat zudem im Vergleich zu herkömmlichen geflochtenen Netzen eine wesentlich höhere Standfestigkeit und bedingt daher einen entsprechend geringeren Wartungsaufwand.

In alternativer Ausführung kann aber auch ein geflochtenes Netz, vorzugsweise geneigt, in den erweiterten Abschnitt 3 des Rauchgaskanals eingebaut werden.

Soweit die Einbauhöhe für den Siebboden aufgrund örtlicher Verhältnisse gering ist, empfiehlt sich der Einsatz der satteldachförmigen Konstruktion des Siebbodens gemäß Figur 4; denn bei dieser Siebbodenkonstruktion ist die Einbauhöhe bei gleicher Neigung der beiden Siebabschnitte 21 und 22 (Figur 4) wesentlich geringer als diejenige des nur einseitig geneigten Siebbodens 10.

## Patentansprüche

1. Anordnung zum Abscheiden von Grobasche aus einem Rauchgasstrom umfassend einen Rauchgaskanal, einen Entstickungskatalysator (5) und ein Abscheidesieb (10; 20), wobei in dem zu dem Entstickungskatalysator (5) führenden Rauchgaskanal das Abscheidesieb (10; 20) angeordnet ist, das sich im wesentlichen über den gesamten Querschnitt des Rauchgaskanals erstreckt und eine Mehrzahl von Durchlässen (31) zum Durchtritt von Rauchgas aufweist, wobei jeder Durchlaß einen Querschnitt hat, der kleiner ist als derjenige der abzuscheidenden Grobaschepartikel,
**dadurch gekennzeichnet,**
**dass** das Abscheidesieb in einem erweiterten, im wesentlichen vertikal verlaufenden Rauchgaskanal-Abschnitt (3) angeordnet ist, in dem der Entstickungskatalysator (5) eingebaut ist,
**dass** das Abscheidesieb (10; 20) als Abscheideboden ausgebildet ist, der unter einem Neigungswinkel von 10° < a < 50° zur Horizontalebene in dem vertikalen Abschnitt (3) des Rauchgaskanals eingebaut ist, wobei der Siebboden (10; 20) aus zickzackförmig abschnitten (13) besteht, deren Faltlinien (z.B. 11) in Gefällerichtung verlaufen, und
**dass** im Bereich des unteren Endes des Abscheidebodens wenigstens eine Austragsöffnung (15) zum Abführen der abgeschiedenen Grobaschepartikel in einer benachbarten Wand des Rauchgaskanals ausgebildet ist.

2. Anordnung nach Anspruch 1, **dadurch gekennzeichnet, dass** der erweiterte vertikale Abschnitt (3) des Rauchkanals an einen engeren, im wesentlichen horizontalen Rauchgaskanalabschnitt (2) anschließt, dass im Anschlussbereich Umlenkelemente (4) angeordnet sind und dass das Abscheidesieb (10; 20) stromab der Umlenkelemente und stromauf eines dem Katalysator vorgeschalteten Strömungsgleichrichters (6) angeordnet ist.

3. Anordnung nach Anspruch 1, **dadurch gekennzeichnet, dass** die wenigstens eine Austragsöffnung (15) über eine äußere Beipassleitung (16) mit dem Rauchgaskanal (3a) stromab der Katalysatoranordnung (5) verbunden ist.

4. Anordnung nach einem der Ansprüche 1 bis 3, **dadurch gekennzeichnet, dass** ein giebeldachförmiger Siebboden (20) im erweiterten Abschnitt (3) des Rauchgaskanals derart eingebaut ist, dass zwei Siebbodenbereiche (21, 22) von einem First aus nach entgegengesetzten Richtungen abfallen und an ihren jeweils unteren Rändern mit wenigstens einer Austragsöffnung (15) in Verbindung stehen.

5. Anordnung nach Anspruch 1, **dadurch gekennzeichnet, dass** zwischen jeweils zwei v-förmigen, benachbarten Faltabschnitten (13) des Siebbodens (10; 20) eine Rinne (12) zum Abführen von abgeschiedenen Grobaschepartikeln ausgebildet ist.

6. Anordnung nach Anspruch 5, wobei jede Rinne (12) mit einer Austragsöffnung (15) verbunden ist.

7. Anordnung nach einem der Ansprüche 1 bis 6, **dadurch gekennzeichnet, dass** das Abscheidesieb (10; 20) als Spaltsieb ausgebildet ist, bei dem die Durchlässe (31) spaltförmig ausgebildet und durch parallele, im Querschnitt etwa dreieckige Stäbe (30) begrenzt sind, die durch quer verlaufende Riegel (32) zu einem starren Modul zusammengeschlossen sind, wobei die spaltförmigen Durchlässe einen von der Zuströmseite zur Abströmseite hin erweiterten Querschnitt haben.

8. Anordnung nach Anspruch 7, **dadurch gekennzeichnet, dass** jeweils zwei Spaltsiebmodule (13) unter Bildung einer Bodenrinne (12) im wesentlichen V-förmig miteinander verbunden sind und dass die die Durchlässe (31) begrenzenden Spaltsiebstäbe (30) im wesentlichen rechtwinklig zum Rinnenverlauf angeordnet sind, um die Grobaschepartikel in die Rinne zu leiten.

9. Anordnung nach einem der Ansprüche 7 bis 8, **dadurch gekennzeichnet, dass** die quer verlaufenden Riegel (32) als Gleichrichterlamellen ausgebildet sind, die eine Gleichrichtung des Abgasstroms in Richtung des Entstickungskatalysators (5) bewirken.

## Claims

1. Arrangement for separating coarse ash from a flue gas flow, comprising a flue gas channel, a nitrogen oxide removal catalyser (5) and a separating filter (10; 20), wherein arranged in the flue gas channel leading to the nitrogen oxide removal catalyser (5) is the separating filter (10; 20) which extends substantially over the entire cross-section of the flue gas channel and has a plurality of passages (31) for passage of flue gas, wherein each passage has a cross-section which is smaller than that of the coarse ash particles to be separated, **characterised in that** the separating filter is arranged in a widened flue gas channel section (3) which extends substantially vertically and in which the nitrogen oxide removal catalyser (5) is installed, that the separating filter (10; 20) is constructed as a separating base which is installed in the vertical section (3) of the flue gas channel at an angle of inclination of 10° < a < 50°, wherein the filter base (10; 20) consists of sections (13) which are folded in zigzag shape and the fold lines (e.g. 11) of which run in slope direction, and that at least one discharge opening (13) for discharge of separated coarse ash particles is formed in an adjacent wall of the flue gas channel in the region of the lower end of the separating base.

2. Arrangement according to claim 1, **characterised in that** the widened vertical section (3) of the flue channel is connected with a narrower, substantially horizontal flue gas channel section (2), that deflecting elements (4) are arranged in the connecting region and that the separating filter (10; 20) is arranged downstream of the deflecting elements and upstream of a flow rectifier (6) arranged upstream of the catalyser.

3. Arrangement according to claim 1, **characterised in that** the at least one discharge opening (15) is connected by way of an outer bypass duct (16) with the flue gas channel (3a) downstream of the catalyser arrangement (5).

4. Arrangement according to any one of claims 1 to 3, **characterised in that** a filter base (20) of gable roof shape is installed in the widened section (3) of the flue gas channel in such a manner that two filter base regions (21, 22) drop away from a ridge in opposite directions and are connected at each of their lower ends with at least one discharge opening (15).

5. Arrangement according to claim 1, **characterised in that** a channel (12) for discharge of separated coarse ash particles is formed between each two V-shaped adjacent fold sections (13) of the filter base (10; 20).

6. Arrangement according to claim 5, wherein each channel (12) is connected with a discharge opening (15).

7. Arrangement according to any one of claims 1 to 6, **characterised in that** the separating filter (10; 20) is constructed as a slotted hole screen, in which the passages (31) are formed to be slit-shaped and are bounded by rods (30), which are approximately triangular in cross-section and which are connected together by transversely extending bars (32) to form a rigid module, wherein the slit-shaped passages have a cross-section widened from the inflow side towards the outflow side.

8. Arrangement according to claim 7, **characterised in that** two respective slotted hole screen modules (13) are connected together substantially in V-shape with formation of a base channel (12) and that the slotted hole screen rods (30) bounding the passages (31) are arranged substantially at right angles to the course of the channels so as to conduct the coarse ash particles into the channels.

9. Arrangement according to one of claims 7 and 8, **characterised in that** the transversely extending bars (32) are constructed as rectifying slats, which produce a rectification of the waste gas flow in the direction of the nitrogen oxide removal catalyser (5).

## Revendications

1. Dispositif pour séparer des cendres grossières d'un courant de gaz de fumée, comprenant un canal de gaz de fumée, un catalyseur de dénitruration (5) et un tamis séparateur (10; 20), où est disposé dans le canal de gaz de fumée menant au catalyseur de dénitruration (5) le tamis séparateur (10; 20), qui s'étend sensiblement sur toute la section transversale du canal de gaz de fumée, et présente une multitude de passages (31) pour le passage du gaz de fumée, où chaque passage a une section transversale qui est plus petite que celle des particules de cendres grossières à séparer;
**caractérisé en ce que** le tamis séparateur est disposé dans une section de canal de gaz de fumée (3) élargie, s'étendant sensiblement verticalement, dans laquelle est installé le catalyseur de dénitruration (5),
**en ce que** le tamis séparateur (10; 20) est réalisé comme fond séparateur, qui est installé selon un angle d'inclinaison de 10° < a < 50° au plan horizontal dans la section verticale (3) du canal de gaz de fumée, où le fond séparateur (10; 20) est constitué de sections (13) pliées en forme de zigzag, dont les lignes de pliage (par exemple 11) s'étendent dans la direction de la chute, et
**en ce qu'**est réalisée dans la zone de l'extrémité inférieure du fond de séparation au moins une ouverture d'évacuation (15) pour évacuer les particules de cendres grossières séparées dans une paroi avoisinante du canal de gaz de fumée.

2. Dispositif selon la revendication 1, **caractérisé en ce que** la section verticale élargie (3) du canal de fumée fait suite à une section de canal de gaz de fumée (2) plus étroite, sensiblement horizontale, **en ce que** sont disposés dans la zone de raccordement des éléments de renvoi (4) et **en ce que** le tamis séparateur (10; 20) est disposé en aval des éléments de renvoi et en amont d'un redresseur d'écoulement (6) disposé en amont du catalyseur.

3. Dispositif selon la revendication 1, **caractérisé en ce qu'**au moins une ouverture d'évacuation (15) est reliée par une conduite de contournement extérieure (16) au canal de gaz de fumée (3a) en aval de l'agencement de catalyseur (5).

4. Dispositif selon l'une des revendications 1 à 3, **caractérisé en ce qu'**un fond séparateur (20) en forme de comble à pignon est installé dans la section élargie (3) du canal de gaz de fumée de telle sorte que deux zones de fond séparateur (21, 22) s'étendent vers le bas à partir d'un pignon selon des directions opposées et sont reliées, à leurs bords respectivement inférieurs, à au moins une ouverture d'évacuation (15).

5. Dispositif selon la revendication 1, **caractérisé en ce qu'**il est réalisé respectivement entre deux sections de pliage avoisinantes (13) en forme de V du fond séparateur (10; 20) une rainure (12) pour l'évacuation de particules de cendres grossières séparées.

6. Dispositif selon la revendication 5, dans lequel chaque rainure (12) est reliée à une ouverture d'évacuation (15).

7. Dispositif selon l'une des revendications 1 à 6, **caractérisé en ce que** le tamis séparateur (10; 20) est réalisé comme tamis à fentes, dans lequel les passages (31) sont réalisés en forme de fente et sont délimités par des tiges parallèles (30) d'une section transversale à peu près triangulaire, qui sont réunies en un module rigide par des traverses (32) s'étendant transversalement, où les passages en forme de fente présentent une section transversale élargie du côté d'afflux vers le côté d'écoulement.

8. Dispositif selon la revendication 7, **caractérisé en ce que** respectivement deux modules de tamis à fente (12), en formant une rainure de fond (12), sont reliés sensiblement en forme de V l'un à l'autre, et **en ce que** les tiges de tamis à fente délimitant les passages (31) sont disposées sensiblement perpendiculairement à l'extension des rainures pour guider les particules de cendres grossières dans la rainure.

9. Dispositif selon l'une des revendications 7 à 8, **caractérisé en ce que** les traverses (32) s'étendant transversalement sont réalisées comme lamelles de redressement qui provoquent un redressement du gaz d'échappement en direction du catalyseur de dénitruration (5).
